# EUROPEAN PATENT APPLICATION

(11) **EP 1 947 621 A2**
(43) Date of publication of application: **23.07.2008**
(21) Application number: 07022501.6
(22) Date of filing: 20.11.2007
(51) Int. Cl.: G08C 17/02

(54) **RF communication system**

(30) Priority: 16.01.2007 JP 2007006638
(71) Applicant: SMK Corporation, Tokyo 142-8511 (JP)
(72) Inventor: Ootsuka, Kenji, Shinagawa-ku Tokyo 142-8511 (JP)
(74) Representative: DTS Zürich

(57) **Abstract**

A remote control transmitter and a controlled apparatus that are paired by a pairing process that remotely controls the controlled apparatus. The operator initially uses the remote control transmitter to control the controlled apparatus so that it performs a specified operation, the remote control transmitter transmits RF packet data that contains a master ID, control data, and a status code that indicates a pairing start via an RF signal, and the controlled apparatus that receives this RF signal transmits RF packet data that contains a slave ID, the master ID, and a status code that indicates pairing ACK back to the remote control transmitter via an RF signal. The controlled apparatus further performs an operation based on the control data included in the transmitted RF packet data.

## Description

### CROSS-REFERENCE TO RELATED APPLICATION

The present application claims priority under 35 U.S.C. §119 to Japanese Patent Application No. 2007-006638 filed on January 16, 2007. The content of the application is incorporated herein by reference in its entirety.

### FIELD OF THE INVENTION

The present invention relates to an RF communications system that remotely controls a controlled apparatus via an RF signal that is transmitted from a remote control transmitter, and more particularly relates to an RF communications system wherein a pair that comprises the remote control transmitter and the controlled apparatus, each of which transmit and receive RF signals, is specified by a pairing process.

### BACKGROUND OF THE INVENTION

Remote control of home appliances, such as air conditioners and televisions, generally makes use of infrared communication (IR communication), wherein an infrared control signal (IR signal) that contains control data is transmitted from a remote control transmitter to the home appliance via infrared rays. However, wireless radio communications (RF communications) systems, wherein control data are carried on an RF (radio frequency) signal that is not constrained by the transmission direction and can be transmitted even if an object is interposed in the transmission path, have been drawing attention in recent years.

In an RF communications system, an RF signal in, for example, the 2.4 GHz band that is modulated with control data is transmitted from a remote control transmitter via an antenna; subsequently, at an RF receiving circuit unit on the controlled apparatus side, the RF signal that is received by an antenna is passed through a bandpass filter, and thereby just the RF signal in the 2.4 GHz band is input, whereupon the control data are demodulated from the RF signal. The demodulated control data are output to an apparatus side microcomputer of the controlled apparatus, and the apparatus side microcomputer then operates each unit of the controlled apparatus in accordance with the control data.

Moreover, it is often the case that the transmission band of the RF signal received by the controlled apparatus and the format of the control data are unified for products that belong to the same category and that are made by the same manufacturer. Accordingly, there is a risk that, for example, a controlled apparatus that belongs to a neighbor will respond when an RF signal, which is unconstrained in its transmission direction, is transmitted from a remote control transmitter. Conventionally, the well-known Bluetooth technology is an example of short range RF communication, wherein a unique master ID and a unique slave ID are assigned to the remote control transmitter on the transmitting side and the controlled apparatus on the receiving side, respectively, and each side receives only an RF signal that contains a counterpart ID, which is reported as a result of the pairing process (see, e.g., Japanese Published Unexamined Patent Application No. H06-296290, paragraphs [0014] - [0021] and FIGs. 3, 4).

According to Japanese Published Unexamined Patent Application No. H06-296290, the remote control transmitter is a cordless remote control and the controlled apparatus is a hot water heater main body, which are pre-assigned a remote control registration number and a main body registration number, respectively. A pairing mode is entered by the operation of an operating means of the controlled apparatus, and that fact is transmitted to the remote control transmitter, which also enters the pairing mode and transmits its own assigned remote control registration number to the controlled apparatus. The controlled apparatus stores this remote control registration number in a storing means and transmits its own apparatus code, the remote control registration number, and the assigned main body registration number back to the remote control transmitter. Then, on the condition that the received remote control registration number matches its own assigned remote control registration number, the remote control transmitter displays the received apparatus code on a display, whereupon the received main body registration number is stored in a storage apparatus if the operator verifies that the apparatus code displayed on the controlled apparatus is a match.

Accordingly, through this pairing process, the remote control transmitter and the controlled apparatus can each store the registration number of their respective communication counterpart, i.e., the main body registration number and the remote control registration number, in their respective storing means, and thereby a pair of communication counterparts is specified such that any wireless signal that does not contain the communication counterpart's registration number that is registered in the storing means is rejected; thereby, an RF communications system is constituted wherein other unintended controlled apparatuses are not mistakenly operated.

Because controlled apparatuses and remote control transmitters that control those controlled apparatuses are mass-produced by the same manufacturer, a pairing procedure that specifies each pair of communication counterparts is performed at the factory during the shipping stage, which occurs immediately prior to the joint packaging of the pair. However, the conventional pairing procedure, which is discussed above, is problematic because it requires multiple sub-procedures wherein either the controlled apparatus or the remote control transmitter is operated in order to set the pairing mode and an operator confirms that the apparatus code matches via bidirectional RF communication; therefore, the execution of this pairing procedure for a large quantity of remote control transmitters and controlled apparatuses requires a lot of time-consuming work, which leads to an increase in the overall cost of manufacturing.

Accordingly, there is also an approach wherein, before a user can actually use a controlled apparatus, he or she must perform the pairing procedure prior to initial use of the remote control transmitter. However, this approach imposes troublesome work on the user and a problem frequently occurs wherein the remote control does not function properly because it is difficult to guide the user in such a way that she or he is able to perform the pairing procedure correctly.

In addition, although an operation verification inspection is performed on mass-produced controlled apparatuses by remotely controlling each one prior to shipping, in an unpaired state, wherein the pair of communication counterparts is unspecified, a controlled apparatus will not receive RF signals from any remote control transmitter, and therefore the controlled apparatus is operated directly to confirm that it functions properly and, after the pairing procedure is performed, the specified remote control transmitter is operated to confirm that it can remotely control just the main functions of the controlled apparatus. Nevertheless, because pre-shipment inspection is performed for each individual controlled apparatus, the inspection of mass-produced remote control transmitters and controlled apparatuses similarly requires a lot of time-consuming labor.

In addition, in a store that displays and sells numerous controlled apparatuses of the same model, when that store closes each day, all of the displayed controlled apparatuses must be turned off or adjusted, e.g., if the controlled apparatuses are air conditioners, then the set temperature of every air conditioner must be adjusted in accordance with the room temperature in the store, and this procedure is troublesome.

### SUMMARY OF THE INVENTION

The present invention considers the problems of the conventional art and it is an object of the present invention to provide an RF communications system that pairs a remote control transmitter and a controlled apparatus without needing to perform a pairing procedure for each individual, mass-produced controlled apparatus and remote control transmitter, and without imposing the burden of this procedure on users.

It is another object of the present invention to provide an RF communications system wherein a remote control transmitter can perform an operation verification inspection of mass-produced controlled apparatuses simply.

It is yet another object of the present invention to provide an RF communications system wherein a single remote control transmitter can remotely and collectively control a plurality of controlled apparatuses in a store that displays numerous controlled apparatuses of the same category.

To achieve the objects discussed above, an RF communications system according to a first aspect of the invention is an RF communications system that comprises: a remote control transmitter that has a key input unit, wherein guidance is provided on the input operation method of each key so that a controlled apparatus is controlled so that it performs a specified operation, and a slave ID storage unit that is capable of storing a slave ID of a communication counterpart, and that generates control data that control the operation of the controlled apparatus in accordance with the input operation performed on the key input unit, transmits an RF signal that is modulated with RF packet data that contain the control data, and demodulates RF packet data from a received RF signal; and the controlled apparatus that has a master ID storage unit that is capable of storing a master ID of a communication counterpart and that controls the operation of each of its units based on the control data of the RF packet data transmitted from the remote control transmitter, and that is capable of transmitting an RF signal that is modulated with RF packet data that contain a unique slave ID that is assigned to itself; wherein, between the remote control transmitter and the controlled apparatus that are respectively specified by the master ID and the slave ID, the RF communications system remotely controls the controlled apparatus via an RF signal that is transmitted from the remote control transmitter through a pairing process in which (between the remote control transmitter and the controlled apparatus that are operated in a pairing mode) the remote control transmitter transmits RF packet data that contain the unique master ID assigned to itself and a mode code that indicates pairing mode start to the controlled apparatus via an RF signal, the controlled apparatus, wherein the master ID is stored in the master ID storage unit, transmits RF packet data that contain the slave ID, the master ID, and a mode code that indicates pairing ACK back to the remote control transmitter via an RF signal, and the remote control transmitter stores the slave ID in the slave ID storage unit; wherein after power is turned on for startup, the slave ID is not stored in the slave ID storage unit, and therefore the remote control transmitter transitions to the pairing mode when control data is generated in accordance with a normal input operation that is performed on the key input unit in accordance with the guided input operation method; the remote control transmitter transmits RF packet data that contain the master ID, the control data, and the mode code that indicates pairing mode start via an RF signal; after power is turned on for startup, the master ID of the communication counterpart is not stored in the master ID storage unit, and therefore the controlled apparatus transitions to the pairing mode when the RF packet data that were demodulated from the received RF signal contains the mode code that indicates pairing mode start; and the controlled apparatus transmits RF packet data that contain the slave ID, the master ID, and the mode code that indicates pairing ACK back to the remote control transmitter via an RF signal, and performs an operation based on the control data contained in the RF packet data that were demodulated from the received RF signal.

When the operator initially uses the remote control transmitter to control the controlled apparatus so that it performs a specified operation, he or she turns on the power to the remote control transmitter and the controlled apparatus and then performs a normal input operation on a key, for which guidance on the input method is provided, in order to control the controlled apparatus so that it performs that operation.

Because the slave ID is not stored in the slave ID storage unit after power is turned on for startup, the remote control transmitter, for which the pairing process is not complete, transitions to the pairing mode when control data are generated in accordance with a normal input operation, and transmits RF packet data that contain the master ID, the control data, and the mode code that indicates pairing mode start via an RF signal.

Because the master ID of the communication counterpart similarly is not stored in the master ID storage unit after power is turned on for startup, the controlled apparatus, for which the pairing process is not complete, transitions to the pairing mode when RF packet data that were demodulated from the received RF signal contain the mode code that indicates pairing mode start, transmits RF packet data that contain the slave ID, the master ID, and the mode code that indicates pairing ACK back to the remote control transmitter via an RF signal, and than performs an operation based on the control data contained in the RF packet data that were demodulated from the received RF signal.

Accordingly, the controlled apparatus performs the operation that the operator has attempted to execute by using the remote control transmitter, and the pairing process, wherein the remote control transmitter and the controlled apparatus respectively store the slave ID of the communication counterpart and the master ID of the communication counterpart, is thereby performed by that remote control process. When the remote control transmitter and the controlled apparatus have undergone the pairing process, the remote control transmitter receives only RF packet data that include the stored slave ID of the communication counterpart, i.e., the controlled apparatus, and the controlled apparatus receives only RF packet data that contain the stored master ID of the communication counterpart, i.e., the remote control transmitter, and therefore other controlled apparatuses are not operated mistakenly.

An RF communications system according to a second aspect of the invention is an RF communications system, wherein after power is turned on for startup, the slave ID is not stored in the slave ID storage unit, and therefore the remote control transmitter transitions to an unpaired mode when control data are generated in accordance with a special input operation that is performed on the key input unit and is different from the guided input operation method; the remote control transmitter transmits RF packet data that contain the control data via an RF signal; after power is turned on for startup, the master ID of the communication counterpart is not stored in the master ID storage unit, and therefore the controlled apparatus transitions to the unpaired mode when the RF packet data demodulated from the received RF signal does not contain the mode code that indicates pairing mode start, but does contain the control data; and the controlled apparatus performs an operation based on the control data contained in the RF packet data that were demodulated from the received RF signal without transmitting RF packet data that contain the mode code that indicates pairing ACK back to the remote control transmitter via an RF signal.

Because the slave ID is not stored in the slave ID storage unit after power is turned on for startup, the remote control transmitter, for which the pairing process is not complete, transitions to the unpaired mode if control data that correspond to the special input operation that is performed on the key input unit and is different than the guided input operation method are generated, and transmits RF packet data, which contain control data but do not contain the mode code that indicates pairing mode start, via an RF signal.

Because the master ID of the communication counterpart similarly is not stored in the master ID storage unit after power is turned on for startup, the controlled apparatus, for which the pairing process is not complete, transitions to the unpaired mode when the RF packet data that were demodulated from the received RF signal do not contain the mode code that indicates pairing mode start, and performs an operation based on the control data contained in the RF packet data that were demodulated from the received RF signal, without transmitting RF packet data that contain the mode code that indicates pairing ACK back to the remote control transmitter via an RF signal.

Accordingly, even in a state wherein the remote control transmitter and the controlled apparatus are unpaired, it is possible-without performing the pairing process-to remotely control an unpaired controlled apparatus so that it performs an operation that is in accordance with the special input operation by performing an input operation on a key of the key input unit with the special input operation, which is different than the guided input operation method, after power is turned on on the remote control transmitter side.

Furthermore, multiple unpaired controlled apparatuses that are within a communication area, wherein they can receive an RF signal, all perform the operation in accordance with the special input operation.

Because the special input operation is different than the normal guided input operation method from the standpoint of, for example, the indication on the keys, it is possible to remotely control one or multiple controlled apparatuses in the unpaired mode, for example, only in a store or in the factory of the manufacturer who manufactures the controlled apparatus-without an ordinary operator mistakenly performing the special input operation.

An RF communications system according to a third aspect of the invention is an RF communications system, wherein after power is turned on for startup, the slave ID is not stored in the slave ID storage unit, and therefore the remote control transmitter transitions to the unpaired mode when the special input operation that is performed on the key input unit and is different than the guided input operation method is received; the remote control transmitter transmits RF packet data that contains the mode code that indicates unpaired mode start via an RF signal; after power is turned on for startup, the master ID of the communication counterpart is not stored in the master ID storage unit, and therefore the controlled apparatus transitions to the unpaired mode when RF packet data demodulated from the received RF signal contains the mode code that indicates unpaired mode start, without transmitting RF packet data that contain the mode code that indicates pairing ACK back to the remote control transmitter via an RF signal; and the controlled apparatus that transitioned to the unpaired mode receives an RF signal transmitted from an unspecified remote control transmitter and performs an operation based on control data contained in the RF packet data that were demodulated from that RF signal.

Because the slave ID is not stored in the slave ID storage unit after power is turned on for startup, the remote control transmitter, for which the pairing process is not complete, transitions to the unpaired mode if the special input operation that is performed on the key input unit and is different than the guided input operation method is received, and transmits RF packet data, which contain the mode code that indicates unpaired mode start, via an RF signal.

Because the master ID of the communication counterpart similarly is not stored in the master ID storage unit after power is turned on for startup, the controlled apparatus, for which the pairing process is not complete, transitions to the unpaired mode when the RF packet data that were demodulated from the received RF signal contain the mode code that indicates unpaired mode start-without transmitting RF packet data that contain the mode code that indicates pairing ACK back to the remote control transmitter via an RF signal. The controlled apparatus that transitioned to the unpaired mode performs an operation based on the control data contained in the RF packet data that were demodulated from all received RF signals-without comparing the master ID contained in the received RF signal with the data in the master ID storage unit.

Accordingly, even in a state wherein the remote control transmitter and the controlled apparatus are unpaired, it is possible-without performing the pairing process-to cause the controlled apparatus to transition to the unpaired mode, wherein its operation is remotely controlled by an RF signal that is transmitted from an unspecified remote control transmitter, by performing an input operation on a key of the key input unit with the special input operation, which is different than the guided input operation method, after power is turned on on the remote control transmitter side. As a result, multiple controlled apparatuses in the unpaired mode that are within a communication area, wherein they can receive an RF signal, all perform the operation in accordance with the special input operation.

Because the special input operation is different than the normal guided input operation method from the standpoint of, for example, the indication on the keys, it is possible to remotely control one or multiple controlled apparatuses in the unpaired mode, for example, only in a store or in the factory of the manufacturer who manufactures the controlled apparatus-without an ordinary operator mistakenly performing the special input operation.

An RF communications system according to a fourth aspect of the invention is an RF communications system, wherein the controlled apparatus comprises: a pulse signal modulation unit that generates a pulse modulated signal based on control data of the RF packet data; a pulse signal demodulation unit that demodulates control data from the pulse modulated signal output from the pulse signal modulation unit; and a format storage unit that stores a pulse modulated signal format, with which the pulse signal demodulation unit of each controlled apparatus of a plurality of controlled apparatuses can demodulate a pulse modulated signal, associated with an output code; the remote control transmitter that transitioned to the pairing mode or the unpaired mode includes an output code, which specifies a pulse modulated signal format with which the pulse signal demodulation unit of the controlled apparatus can perform demodulation, and control data in the RF packet data; and the controlled apparatus that transitioned to the pairing mode or the unpaired mode reads out the pulse modulated signal format associated with the output code that is contained in the RF packet data from the format storage unit, and outputs a pulse modulated signal that is pulse modulated with control data in accordance with the pulse modulated signal format that was read out to the pulse signal demodulation unit.

The remote control transmitter transmits the control data and the output code to the controlled apparatus via an RF signal by including the output code that is associated with the pulse modulated signal format, with which the pulse signal demodulation unit of the controlled apparatus can demodulate the pulse modulated signal, in the RF packet data. The controlled apparatus reads out the pulse modulated signal format associated with the output code contained in the RF packet data from the relevant format storage unit, and the pulse signal modulation unit outputs a pulse modulated signal that is pulse modulated with control data in accordance with the pulse modulated signal format that was read out to the pulse signal demodulation unit. Because the pulse modulated signal, which is in a pulse modulated signal format that can be demodulated, is input to the pulse signal demodulation unit, the control data can be demodulated from the pulse modulated signal.

### BRIEF DESCRIPTION OF THE DRAWINGS

The invention will become more readily apparent from the Detailed Description of the Invention, which proceeds with reference to the drawings, in which:
FIG. 1 is a block diagram that shows the configuration of an entire RF communications system 1 according to one embodiment of the present invention.
FIG. 2 is an oblique view of an RF communication module 2 according to one embodiment of the present invention.
FIG. 3 is an explanatory diagram that shows the format of UART data that are input and output via a UART interface 5.
FIG. 4 is an explanatory diagram that shows the format of RF packet data that are transmitted and received via an RF signal.
FIG. 5 is a flow chart of the process that is performed after the power to a remote control transmitter 3 and a controlled apparatus 4 is turned on.
FIG. 6 is a flow chart of the process that is performed in an initial operation mode by the remote control transmitter 3 and the controlled apparatus 4.
FIG. 7 is an explanatory diagram that shows a pairing process.
FIG. 8 is a block diagram that shows the operation of the remote control transmitter 3 and a plurality of controlled apparatuses 4 in an unpaired mode.
FIG. 9 is a block diagram that shows the operation of the remote control transmitter 3 and the plurality of controlled apparatuses 4 in a normal mode.
FIG. 10 is a block diagram that shows the operation of the remote control transmitter 3 and an IR communications system dedicated controlled apparatus 4A in the unpaired mode.
In the figures, elements that are repeatedly illustrated are consistently identified by a single reference numeral.

### DETAILED DESCRIPTION OF THE INVENTION

The following table provides a key to the reference numerals and elements depicted in the drawings:
- 1: RF communication system
- 2: RF communication module
- 3: Remote control transmitter
- 4: Controlled apparatus
- 5: UART interface
- 7: Antenna (printed antenna)
- 8: Communication control unit (control MPU)
- 9: RF communication circuit unit
- 12: Remote control-side microcomputer (remote control MPU)
- 13: Device-side microcomputer (controlled device MPU)
- 14: Pulse signal interface (PWM output interface)
- 15: Format storage unit
- 16: Pulse signal modulation unit
- 17: Key input unit
- 19: Pulse signal demodulation unit
- 20: ID storage unit (slave ID storage unit, master ID storage unit)

According to the first aspect of the invention, a pairing process that specifies a pair that comprises a remote control transmitter and a controlled apparatus can be performed automatically by a process wherein an operator performs an initial input operation on a key of the remote control transmitter in order to control the controlled apparatus so that it performs a specified operation, and therefore troublesome pairing work is not imposed on the operator.

In addition, the manufacturer does not need to perform the pairing work for each mass-produced controlled apparatus and remote control transmitter prior to shipping, which makes it possible to shorten the manufacturing process and lower manufacturing costs.

According to the first and second aspect of the invention, it is possible to remotely control the operation of an unspecified controlled apparatus that has not performed the pairing process merely by performing the special input operation on a key of the remote control transmitter, and therefore it is possible to use the remote control transmitter to perform an operation verification inspection simultaneously for numerous mass-produced controlled apparatus.

In addition, it is possible to remotely control multiple controlled apparatuses collectively with a single remote control transmitter at a store wherein numerous controlled apparatuses of the same category are displayed.

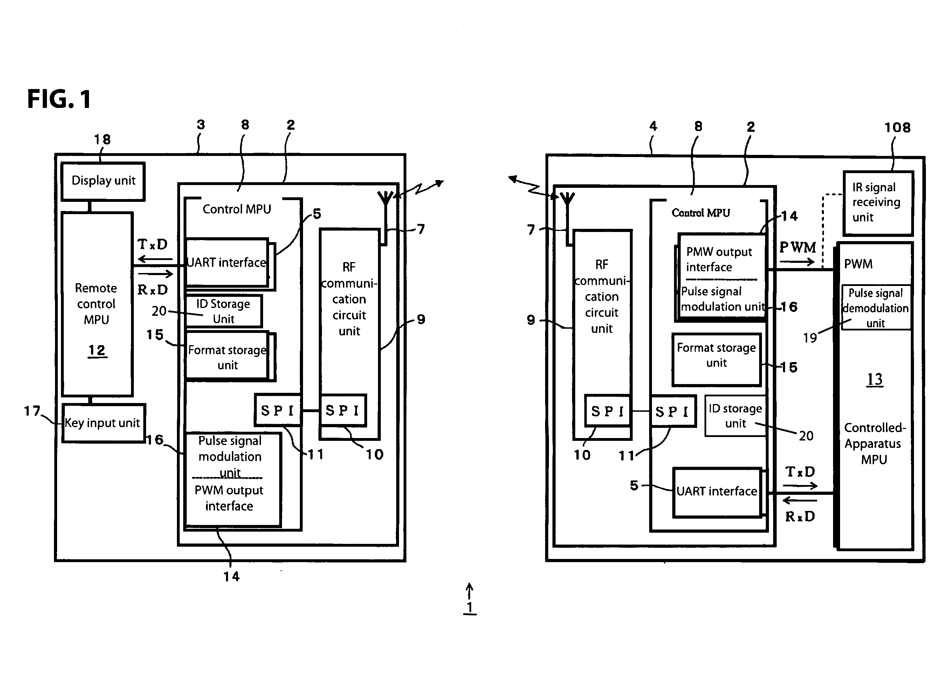

According to a fourth aspect of the invention, even if there is a variety of IR communications system dedicated controlled apparatuses that each have a pulse signal demodulation unit that demodulates control data from a pulse modulated signal, it is still possible to remotely control them via an RF signal by the remote control transmitter including, in the RF packet data, an output code that is associated with a pulse modulated signal format with which the pulse signal demodulation units of the controlled apparatuses can demodulate the pulse modulated signal. The following explains an RF communications system 1 according to one embodiment of the present invention, referencing FIG. 1 through FIG. 10.

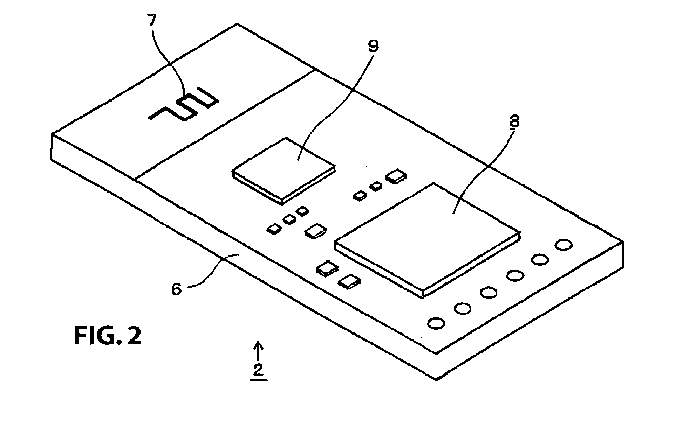

FIG. 1 is a block diagram that shows an RF communications system 1 that comprises an RF signal remote control transmitter 3, which is on the transmitting side, and a controlled apparatus 4, which is on the receiving side. In the present embodiment, the remote control transmitter 3 and the controlled apparatus 4 each comprise an RF communication module 2 of the same configuration shown in FIG. 2.

Each RF communication module 2 comprises a printed wiring board 6; in addition, on a mounting surface of the printed wiring board 6, each RF communication module 2 further comprises: a printed antenna 7 that is formed by printing and wiring a conductive pattern; a control MPU that comprises a communication control unit 8 that is mounted on the remaining position of mounting surface; and an RF communication IC chip, which is an RF communication circuit unit 9. Although it is expensive, a glass epoxy resin wiring board, which has excellent electrical and mechanical properties, is used for each printed wiring board 6, and each printed antenna 7 is formed by printing and wiring it on the wiring board 6, which has a high dielectric constant, and therefore constant RF communication characteristics are obtained that are unaffected by, for example, manufacturing errors. Because each printed antenna 7 functions as an antenna that transmits and receives RF signals, a power supply unit at one end of each glass epoxy resin wiring board is connected to an RF input-output port (not shown) of the corresponding RF communication circuit unit 9.

Each RF communication circuit unit 9 comprises a direct sequence spread spectrum modulator-demodulator (DSSS) modulation-demodulation unit (not shown), transmits a modulated signal, wherein RF packet data (discussed later) output by the corresponding communication control unit 8 are spread spectrum modulated, from the corresponding printed antenna 7 as RF signals, demodulates RF packet data from RF signals received by the printed antenna 7, and outputs such to the communication control unit 8 to which it is connected via an serial peripheral interface (SPI) 10. RF signals modulated by the RF communication circuit unit 9 are spread spectrum modulated onto any of multiple channels, each of which uses 2 MHz of bandwidth, at 5 MHz intervals within a 2.4 GHz band.

Each communication control unit 8 is connected to a corresponding RF communication circuit unit 9 via an SPI 11 and comprises: a UART interface 5 that can connect to a remote control MPU 12 or a controlled apparatus MPU 13, which input and output serial transmit data (TxD) and receive data (RxD). In the communication control unit 8 of the controlled apparatus 4, a pulse signal interface 14 that can connect to the controlled apparatus MPU 13, which has a pulse modulated signal input port. Namely, as shown in FIG. 1, if either the MPU 12 or the MPU 13 has a built-in universal asynchronous receiver transmitter (UART), which converts serial bit stream data into parallel byte data that are handled by the relevant MPU, and also has an input-output port that inputs and outputs serial transmit data (TxD) and receive data (RxD), then the input-output port is connected to the corresponding UART interface 5; in addition, if the controlled apparatus MPU 13 has a pulse modulated signal input port (herein, a PWM input port) that inputs a pulse modulated signal, then, instead of or along with being connected to the UART interface 5, the controlled apparatus MPU 13 is connected to the pulse signal interface (PWM output interface) 14.

In addition, an ID storage unit 20 is built into each communication control unit 8 and stores the relevant assigned unique ID and a communication counterpart ID if one has been specified by the pairing process. The unique ID may be assigned based on, for example, the manufacturing date and the product number of the RF communication module 2 that comprises that ID storage unit 20. A master ID is stored as an assigned unique ID in the ID storage unit 20 of the RF communication module 2 that is attached to the remote control transmitter 3, and a slave ID is stored as an assigned unique ID in the ID storage unit 20 of the RF communication module 2 that is attached to the controlled apparatus 4.

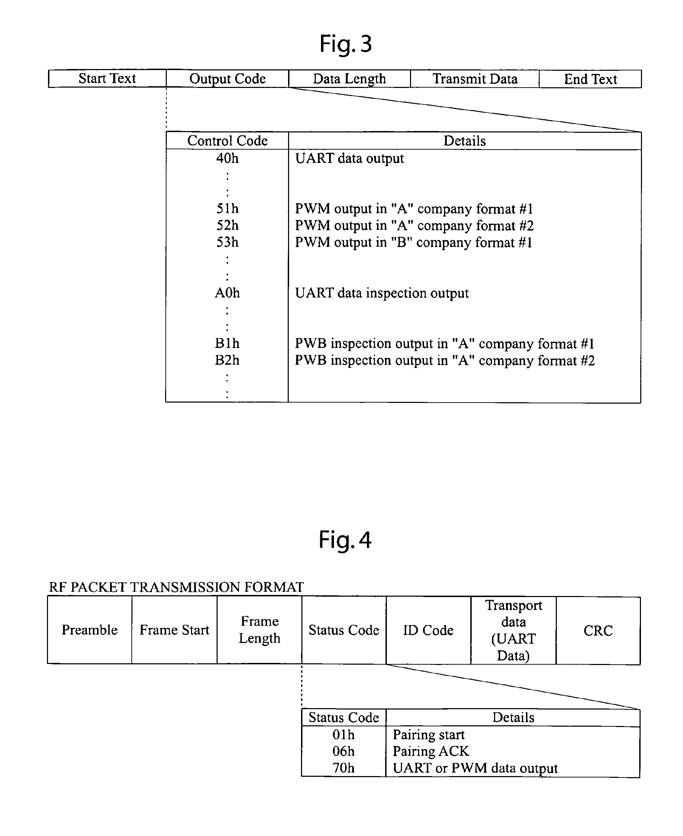

When either communication control unit 8 inputs UART data, which is discussed later, from its respective MPU 12 or 13 via the corresponding UART interface 5, RF packet data that are to be transmitted by the RF signal are generated and output to the corresponding RF communication circuit unit 9. The following explains the format of this RF packet data, referencing FIG. 4. A preamble is followed by a 1 byte frame start signal that indicates the head of a communication frame, which is followed by a 1 byte "frame length" field that indicates the length of the entire frame. A 1 byte "status code" field that follows the "frame length" field reports the purpose of the communication to the communication counterpart of the RF signal. In addition, if the "status code" field is used as a mode code that transmits a start mode (discussed later) instruction to the communication counterpart, then "01h" is assigned to "pairing mode start," which reports the start of the pairing process in the pairing mode, "06h" is assigned to "pairing ACK," which reports the response from the communication counterpart, and "70h" is assigned if control data are transported in the normal operation mode.

An "ID code" field contains a unique ID that is assigned to the transmission source that transmits the RF packet data, and that unique ID is read out from the relevant ID storage unit 20, which was previously discussed, when the RF packet data are generated. The receiving side, which receives the RF signal, compares the unique ID indicated in the "ID code" of the demodulated RF packet data with the unique ID of the communication counterpart that was specified by the pairing process if such is stored in the ID storage unit 20, and rejects the reception of the RF signal if its unique ID does not match the unique ID of the communication counterpart that was specified by the pairing process. Accordingly, other controlled apparatuses that comprise identically configured RF communication modules 2 and have the same RF signal reception and demodulation functions are not mistakenly operated-even if they are disposed within the RF communication area. Furthermore, in a state wherein the unique ID of a specified communication counterpart is not stored in the corresponding ID storage unit 20, instead of the unique ID assigned to the transmission source, the "ID code" can serve as the ID that indicates a specified operation mode and can also serve as a mode code that transmits a mode start to the communication counterpart.

If the packet is transporting control data, then UART data that contain control data (discussed later) input from the MPU 12 or the MPU 13 are included in the "transport data" as is. After the "transport data," a "CRC" (cyclic redundancy check), which is generated based on the data of the entire RF packet, is appended.

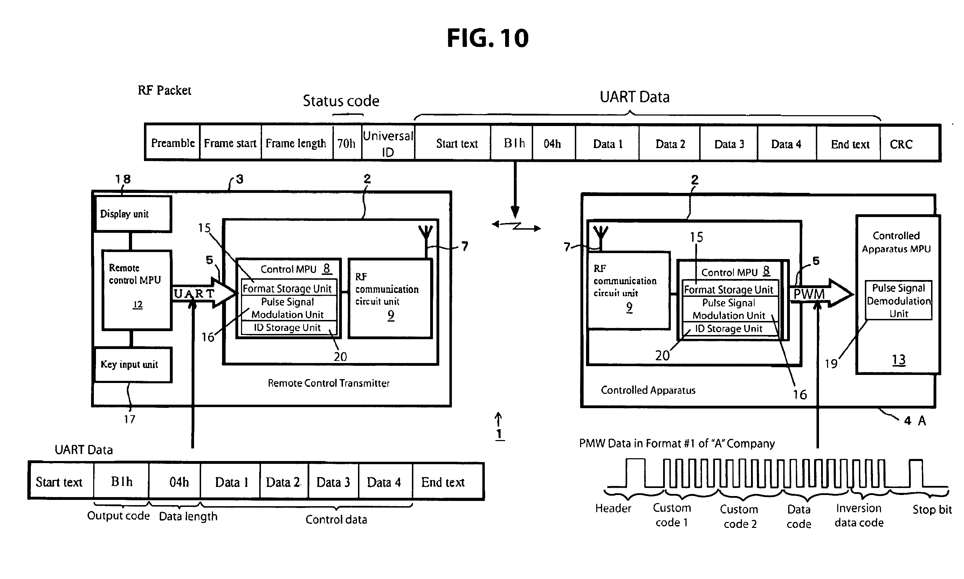

In a conventional IR communications system that performs remote control by transmitting an IR signal that is modulated with control data to a controlled apparatus, the pulse width modulation (PWM) method or the pulse position modulation (PPM) method is used as the primary method of modulating the control data with the aim of using the IR signal to transmit the control data with optimum communication quality. In this case, a secondary modulated signal, wherein a 38 KHz burst wave is secondarily modulated with the primary modulated pulse modulated signal, is transmitted as the IR signal. The controlled apparatus MPU 13 of the controlled apparatus 4, which is on the receiving side of the IR signal, has the pulse modulated signal input port in order to input the pulse modulated signal, which was demodulated from the IR signal, and demodulate the control data. To further reduce manufacturing costs, the controlled apparatus MPU 13 of an IR communications system dedicated controlled apparatus 4A (see, e.g. FIG. 10) may only have the pulse modulated signal input port and a pulse signal demodulation unit 19, and does not have a serial data input-output port. The present invention can also be adapted to an IR communications system dedicated controlled apparatus 4A that comprises such a controlled apparatus MPU 13; however, the controlled apparatus MPU 13 of the controlled apparatus 4 shown in FIG. 1 will be explained on the assumption that it has both a serial input-output port and a PWM input port that inputs a PWM modulated signal.

The format of the pulse modulated signal used by the IR communications system can be varied according to the pulse modulation method, the manufacturer of the controlled apparatus, and the category of the controlled apparatus so that other unintended apparatuses are not mistakenly operated as a result of the transmission of an IR signal. Accordingly, although the pulse signal demodulation unit 19 of the controlled apparatus MPU 13 that has the pulse modulated signal input port is configured so that it decodes only pulse modulated signals that have a specified pulse modulated signal format, the communication control unit 8, in order to enable the remote control MPU 12 to output a pulse modulated signal from the pulse signal interface 14 that can be demodulated, further comprises: a format storage unit 15 that stores other types of pulse modulated signal formats that differ by pulse modulation method, the manufacturer of the controlled apparatus, and the category of the controlled apparatus; and a pulse signal modulation unit 16 that generates the pulse modulated signal. The other types of pulse modulated signal formats are each associated with an output code, which is discussed later, and stored in the format storage unit 15, and the pulse signal modulation unit 16 generates the pulse modulated signal in the pulse modulated signal format that is read out from the output code.

In the remote control transmitter 3, an input port that inputs the transmit data (TxD) and an output port that outputs the receive data (RxD) of the remote control MPU 12 are each connected to the UART interface 5 of the communication control unit 8, which is included in the RF communication module 2 of the configuration discussed above. A key input unit 17, which comprises multiple keys that are capable of an input operation such as a pressing operation, and a display unit 18, which displays guidance on the input operation for each key, the result of the key input operation, and the like, are connected to the remote control MPU 12 of the remote control transmitter 3.

In order for the operator to understand the correspondence between the input operation of a key and the operation of the controlled apparatus 4 that is controlled thereby, guidance on the input operation method for each key of the key input unit 17 is provided by, for example, an indication on the key, a display on the display unit 18, an instruction manual, voice guidance, or the like. For example, if the controlled apparatus 4 is an air conditioner, then an indication that corresponds to an operation, such as "cool," "dehumidify," or "raise set temperature," is indicated on each key of the remote control transmitter 3, and the operator controls the controlled apparatus 4 so that it runs in the "cool" mode by performing the input operation on the key on which the guidance, "cool," is indicated.

The key input unit 17 accepts two types of input operations: an input operation wherein input via a key is guided so as to execute a desired operation on the controlled apparatus 4 (hereinbelow, an input operation that is based on guidance is called a normal input operation); and an input operation that is based on a special method that is absolutely not disclosed by, for example, indicating it on a key, displaying it on the display, or describing it in the instruction manual (hereinbelow, an input operation that differs from a guided input operation is called a special input operation). Furthermore, regardless of which input operation is used to operate a key, the remote control MPU 12 generates control data that correspond to the key on which the input operation was performed.

To discriminate a special input operation from a normal input operation and to ensure that the former is not mistakenly performed, a special input operation is defined based on an input operation method for which guidance is not provided and that would never normally be performed unintentionally such as an input operation that is performed on a key that is disposed in an operation unit at a position that is hidden from the operation surface of the remote control transmitter 3, an input operation that is performed on multiple keys, or an input operation that combines multiple input operations performed at intervals.

The control data generated by the remote control MPU 12 contain UART data in the UART data format shown in FIG. 3, and are output from the UART interface 5 to the communication control unit 8 of the RF communication module 2. As shown in FIG. 3, the UART data are input and output as bit stream data, and therefore a start text field and an end text field are appended before and after the data in order to indicate the data frame that is to be input or output.

After the start bit, a 1 byte "output code" is determined based on the type of the controlled apparatus MPU 13 of the controlled apparatus 4 and the type of input operation method (normal input operation or special input operation). Therefore, if serial UART data are output from the UART interface 5 of the RF communication module 2 on the apparatus side to the controlled apparatus MPU 13, then the "output code" is set to "40h" or "A0h." In addition, if a PWM modulated signal is output from the PWM output interface 14 of the RF communication module 2 on the apparatus side to the PWM input port of the controlled apparatus MPU 13, then the "output code" is set to a code, e.g., "51h" through "53h," "B1h," "B2h," or the like, that specifies a pulse modulated signal format that can be demodulated by that controlled apparatus MPU 13. As shown in the figure, the output format for outputting to controlled apparatus MPUs 13 of the same type are assigned two types of output codes-one for normal input operation and one for special input operation. When control data are generated based on a normal input operation, the "output code" is assigned to one of the codes from "40h" through "9Fh." When control data are generated based on a special input operation, the "output code" is assigned a code of "A0h" or one therebelow. "A0h" or below, which indicates a special input operation, is assigned to the "output code" in order to remotely control the controlled apparatus 4 in the unpaired mode in special circumstances, such as when performing shipping inspection, and the use of these codes makes it possible to remotely control an unpaired controlled apparatus 4 using control data that are the same as that used in the normal operation mode. In other words, the "output code" can also serve as a mode code that transmits an unpaired mode start to the communication counterpart.

The control data are indicated by "transmit data," for which for example a maximum of 114 bytes is allocated, and the 1 byte "data length" field indicates the byte count of the data in the "transmit data." In the controlled apparatus 4, the serial input-output port of the controlled apparatus MPU 13 is connected to the UART interface 5 of the communication control unit 8, the PWM input port is connected to the PWM output interface 14, and the communication control unit 8 and the PWM output interface 14 are both attached to the RF communication module 2 on the apparatus side. If we assume that the controlled apparatus 4 is one that is controlled by the reception of an IR signal that is modulated by a PWM modulated signal in format #2 of company "A," then the controlled apparatus 4 comprises an IR signal light receiving unit 108 that receives the light of the IR signal and demodulates the PWM modulated signal from the envelope of the received signal waveform that was photoelectrically converted, and the pulse signal demodulation unit 19 of the controlled apparatus MPU 13 inputs that PWM modulated signal via the PWM input port and demodulates the control data contained in the UART data. However, the PWM input port connection, which is with the IR signal light receiving unit 108 at this point in time, switches to the PWM output interface 14 of the RF communication module 2.

In addition, by connecting the input port, which inputs the transmit data (TxD), to the UART interface 5 of the communication control unit 8, the controlled apparatus MPU 13 can input bit stream UART data from the RF communication module 2, and can therefore obtain control data from either the PWM input port or the input port that inputs serial data. Moreover, the output port that outputs the receive data (RxD) is connected to the RF communication module 2, and therefore the controlled apparatus MPU 13 can output UART data in the UART data format shown in FIG. 3; for example, operation information (room temperature and the like) of the controlled apparatus 4, which is an air conditioner, can be included in the "transmit data" of the UART data transmitted to the remote control transmitter 3 and then displayed on the display unit 18 thereof.

The following divides the operations of the pair that comprises the remote control transmitter 3 and the controlled apparatus 4, which constitute the RF communications system 1, into the operation modes of the "pairing mode," the "unpaired mode," and the "normal operation mode," and explains each one.

In the "pairing mode," the pairing process, which specifies the pair that comprises the remote control transmitter 3 and the controlled apparatus 4, is executed. The pairing process is executed along with a process wherein the operator who purchased the controlled apparatus 4 performs an input operation on the keys of the remote control transmitter 3, which is initially packaged with the controlled apparatus 4, to remotely control the controlled apparatus 4.

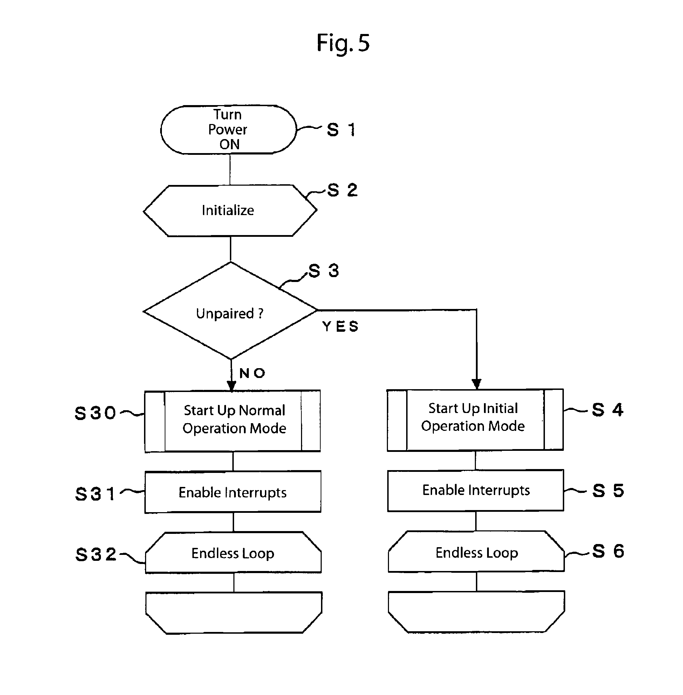

As shown in FIG. 5, when the power to the remote control transmitter 3 and the controlled apparatus 4 is turned on (step S1), each of their boot programs is started up and initialized (step S2), and it is then determined whether the pairing process is complete (step S3). In step S3, it is determined whether the unique ID of the communication counterpart, which indicates a specified communication counterpart, is stored in the relevant ID storage unit 20. Immediately after the purchase is made, neither the ID storage unit 20 of the remote control transmitter 3 nor the ID storage unit 20 of the controlled apparatus 4 (the remote control transmitter 3 and the controlled apparatus 4 are sold as a pair) store the unique ID of the corresponding communication counterpart, which indicates the specified communication counterpart, and therefore the RF communication module 2 of the remote control transmitter 3 and the RF communication module 2 of the controlled apparatus 4 transition to an initial operation mode (step S4) and stand by in an endless loop (step S6) until there is a specified interrupt (step S5). However, if each ID storage unit 20 stores the unique ID of the corresponding communication counterpart, which indicates a specified communication counterpart, then the pairing process is considered to be complete, and the corresponding RF communication module 2 transitions from step S3 to the normal operation mode (step S30) and stands by in an endless loop (step S32) until there is a similar specified interrupt (step S31).

Assuming that the controlled apparatus 4 is an air conditioner, when the operator remotely operates the air conditioner 4 for the first time after purchasing such so that it performs the cooling operation, she or he performs an input operation on, for example, the "cool" key of the numerous keys that are disposed on the operation surface of the remote control transmitter 3. This input operation is guided by the indication of "cool" on the key and causes the air conditioner to execute the "cool" operation, and therefore is a normal input operation, after which the remote control MPU 12 generates-based on the key data of the key on which the input operation was performed-for example, 4 byte control data "data 1 through data 4" that contains an instruction to perform the "cool" operation.

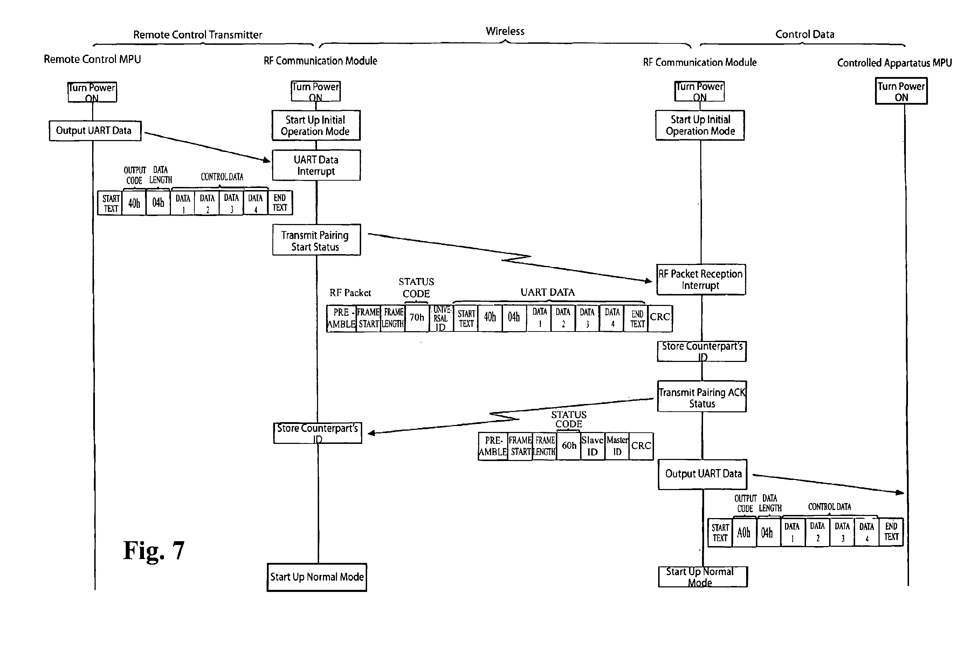

The remote control MPU 12 of the remote control transmitter 3 generates UART data that further contain the control data, and the output code is determined by the output format that is used by the controlled apparatus 4, which was sold as a pair with the remote control transmitter 3, and the input operation method. Here, it is assumed that the controlled apparatus 4 is one that is for an RF communications system that is configured so that it is controlled by RF signals, and because the input operation method is a normal input operation, the UART data, which comprise, as shown in FIG. 7, the "output code" that is set to "40h," the "data length" that is set to "04h" to indicate the 4 bytes of "data 1 through data 4," and "data 1 through data 4" that are generated based on the "transmit data," are output from the output port to the RF communication module 2 of the remote control transmitter 3 via the corresponding UART interface 5.

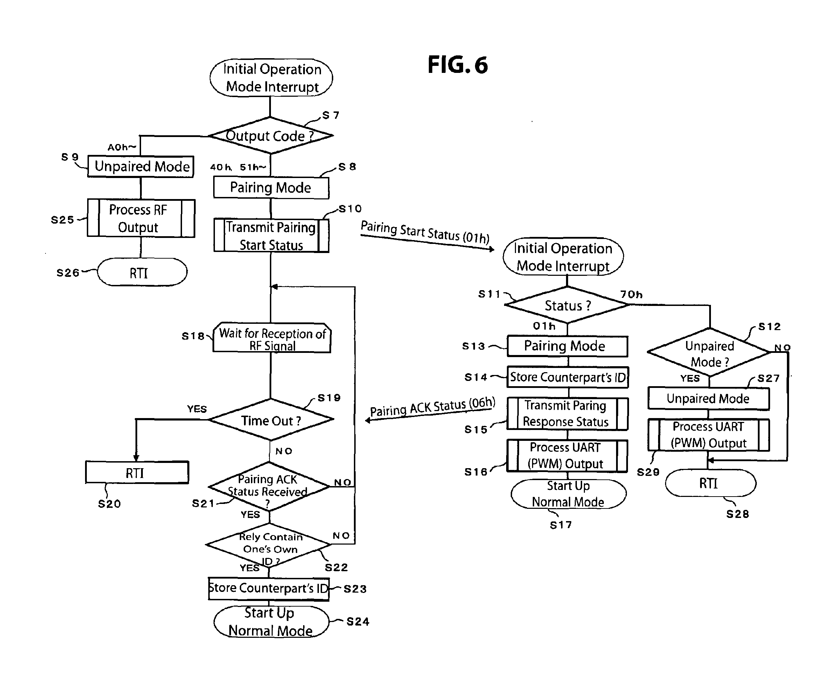

Triggered by the UART data interrupt, this RF communication module 2, which is operated in the initial operation mode, determines the input operation type based on the "output code" of the UART data that is input (step S7) at the start of the flowchart shown in FIG. 6. Namely, if the "output code" of the UART data is in the range of "40h" to "9Fh," then it is determined to be a normal input operation and therefore the mode transitions to the "pairing mode" (step S8); however, if the "output code" is determined to be "A0h" or below, then it is determined to be a "special input operation," and therefore the mode transitions to the "unpaired mode" (step S9).

The "output code" field is "40h" and the communication control unit 8 of the RF communication module 2 that transitioned to the "pairing mode" generates the RF packet data shown in FIG. 7, wherein the controlled apparatus 4 is set similarly to the "pairing mode," and the RF packet data are transmitted as an RF signal (step S10). Namely, as shown in the same figure, in order for the master ID that is assigned to the remote control transmitter 3 to be transmitted to the controlled apparatus 4, the master ID that is read out from the ID storage unit 20 is assigned to the "ID code" of the RF packet data; similarly, in order to determine that the "output code" indicates the "normal operation mode," which is discussed later, wherein the master ID and the like are transmitted, the "status code" is assigned a "mode code" of "01h" that indicates "pairing mode start." In addition, following the "ID code," the "transport data" contains the abovementioned UART data, as is, and thereby the control data (data 1 through data 4) contain the output code of "40h" and the RF packet data.

The RF packet data generated by the communication control unit 8 are output to the RF communication circuit unit 9 via the SPIs 11, 10, and the RF communication circuit unit 9 outputs the modulated signal, which has been DSSS modulated with all of the data of the RF packet, to the printed antenna 7 where it is transmitted as an RF signal on one of the channels in the 2.4 GHz band (step S10).

When the printed antenna 7 of the RF communication module 2 on the controlled apparatus 4 side receives this RF signal, the signal is DSSS demodulated by the corresponding RF communication circuit unit 9, and then the demodulated RF packet data, which are shown in FIG. 7, are output to the corresponding communication control unit (control MPU) 8 via the SPIs 10, 11. Triggered by the interrupt of the RF packet data, the communication control unit 8 of the RF communication module 2, which is operating in the initial operation mode, determines whether the received RF signal is one that indicates the start of the pairing process based on the fact that the "ID code" of the RF packet data contains the master ID and on the data of the "status code," which is a mode code (step S11 of FIG. 6). If the "status code" is "70h," then it is determined whether the RF signal is in the "unpaired mode" (step S12), in which case control data other than that for the pairing process are being transported; here, however, the "status code" is "01h," which indicates "pairing mode start," and therefore the mode transitions to the "pairing mode" (step S13).

The communication control unit 8 of the RF communication module 2, which transitioned to the "pairing mode," stores the master ID, which is contained in the ID code of the RF packet data that was input, in the ID storage unit 20 as the unique ID of the communication counterpart (step S14), generates RF packet data, as shown in FIG. 7, that indicate a pairing response, and transmits an RF signal that is modulated by the RF communication circuit unit 9 from the printed antenna 7 (step S15). As shown in FIG. 7, in order for the slave ID that is assigned to the controlled apparatus 4 to be transmitted to the remote control transmitter 3, the slave ID that is read out from the ID storage unit 20 is assigned to the "ID code" of the RF packet data that indicates this pairing response; furthermore, in order to identify the "normal operation mode," wherein the ID of the transmission source and the like are transmitted, a "mode code" of "06h," which indicates "pairing ACK," is assigned to the "status code." Furthermore, the "transport data" that follows the "ID code" contains the previously discussed master ID, which was received from the remote control transmitter 3 and stored in the relevant ID storage unit 20.

In addition, because the "output code" is "40h," the communication control unit 8 outputs the UART data portion of the RF packet data, as is, from the UART interface 5 to the input port of the controlled apparatus MPU 13 as bit stream transmit data (TxD) (step S16), as shown in FIG. 7. The controlled apparatus MPU 13 uses the built-in UART to convert the UART data to parallel data, which are handled by the bus lines, and controls the air conditioner, which is the controlled apparatus 4, in accordance with the control data (data 1 to data 4) contained in the UART data so that it performs the cooling operation.

The RF communication module 2 of the controlled apparatus 4 that transmitted the pairing ACK RF signal transitions to the normal operation mode (step S17) and terminates the initial operation mode.

Moreover, the RF communication module 2 of the remote control transmitter 3 that transmitted the pairing mode start RF signal stands by for an RF signal (step S18) that contains a pairing ACK mode code transmitted back from the controlled apparatus 4, compares the time that has elapsed since the pairing mode start RF signal was transmitted with the estimated response time that is set based on the processing time needed in the pairing mode for the abovementioned controlled apparatus 4 to send a reply transmission with the pairing ACK RF signal (step S19), and, if the response time has elapsed, returns to the routine (step S5) that enabled the interrupt of the initial operation mode (step S20).

When an RF signal is received before the elapse of the estimated response time, the "ID code" of the RF packet data, which were demodulated from the RF signal, contains the slave ID of the communication source, and therefore it is further determined whether the data of the "status code," which is a mode code, is "06h," which indicates "pairing ACK" (step S21); in addition, it is determined whether the "transport data" contains the unique ID assigned to itself, i.e., the master ID (step S22). If either condition is not met, it is considered that an RF signal from the specified communication counterpart in the pairing mode has not been received, and therefore the remote control transmitter 3 stands by for the reception of a pairing ACK RF signal once again (step S18).

If the "status code" is set to "06h," which indicates "pairing ACK, " and the "transport data" contains the master ID, then it is determined that a pairing ACK RF signal, which was transmitted back from the controlled apparatus 4 that the operator is trying to remotely control for the first time, has been received, and the slave ID, which is contained in the ID code of the inputted RF packet data, is stored in the ID storage unit 20 as the ID code of the communication counterpart (step S23) after which the mode transitions from the pairing mode to the normal operation mode (step S24); thereby, the pairing process that specifies the pair, which comprises the remote control transmitter 3 and the controlled apparatus 4, is completed.

Through this pairing process, the remote control transmitter 3 stores the slave ID of its communication counterpart in its ID storage unit 20, and the controlled apparatus 4 stores the master ID of its communication counterpart in its ID storage unit 20, and therefore it is possible for each one to effectively receive only an RF signal wherein the ID code, which indicates a communication source, contained in the received RF signal matches the ID of the relevant communication counterpart, i.e., the slave ID or the master ID, that is stored in the corresponding ID storage unit 20; thereby, it is possible to perform RF communication only between the pair that comprises the remote control transmitter 3 and the controlled apparatus 4 that was specified by the pairing process.

In addition, because this pairing process is performed without the operator's knowledge by a procedure wherein the operator performs an input operation on the remote control transmitter 3 to remotely control the controlled apparatus 4, it does not become a burden to the operator.

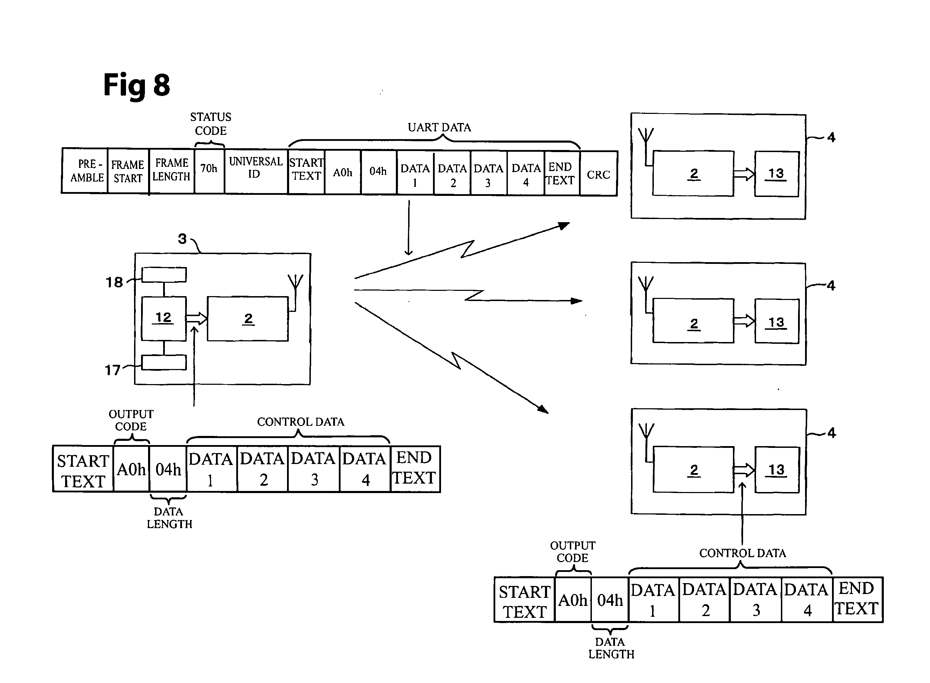

In the present invention, the pairing process is performed by the operator who uses the controlled apparatus 4, and therefore, regardless of whether the remote control transmitter 3 or the controlled apparatus 4 is turned on, it is set to the initial operation mode in the stage when, for example, it is manufactured, shipped, or installed in a store. In the initial operation mode, the controlled apparatus 4 is not set so that it can be controlled only by a specified remote control transmitter 3, and therefore, by taking advantage of this fact, it is possible to dispose numerous controlled apparatuses 4 in the RF communication area of the remote control transmitter 3 and to simultaneously control the numerous controlled apparatuses 4 by a single remote control transmitter 3. The following explains an example as shown in FIG. 8 wherein multiple air conditioners 4, each of which has a configuration that is identical to that discussed above, are simultaneously remotely controlled in the shipping stage at the manufacturing factory in the "unpaired mode" by a single remote control transmitter 3 in order to inspect whether they can execute the "cool" operation normally.

In the present embodiment, prior to the input operation that causes a prescribed operation to be performed, a special input operation that performs that prescribed operation is executed, for example, by the simultaneous pressing of a key that indicates "cool" and a key that indicates "heat," which are both on the remote control transmitter 3, for two or more seconds. Accordingly, after the key that indicates "cool" and the key that indicates "heat" are simultaneously pressed for two or more seconds to cause the controlled apparatus 4 to execute the "cool" operation by means of the special input operation, the keys are released and the key that indicates "cool" is pressed once again.

Similar to the normal input operation, the remote control MPU 12 of the remote control transmitter 3 generates-based on the key data of the key on which the input operation was performed-for example, 4 bytes of control data "data 1 through data 4" that contain an instruction to perform the "cool" operation as well as UART data that contain the control data. However, because the input operation method is a special input operation, UART data, wherein the "output code" is set to "A0h," are output to the RF communication module 2 of the remote control transmitter 3.

Triggered by the interrupt of the UART data, the RF communication module 2, which is operated in the initial operation mode, determines the input operation type based on the "output code" of the UART data that was input (step S7), as discussed earlier. Because the "output code" is "A0h," it is determined to be a "special input operation" and therefore the mode transitions to the "unpaired mode" (step S9).

The "output code" is "A0h," and therefore the communication control unit 8 of the RF communication module 2 that transitioned to the "unpaired mode" generates the RF packet data shown in FIG. 8, wherein the controlled apparatus 4 that is the communication counterpart is in the "unpaired mode," and transmits the RF packet data as an RF signal (step S25 of FIG. 6). The "output code," which constitutes part of the RF packet data, is "A0h," which indicates the "unpaired mode," and therefore also serves to indicate a "mode code." However, in the present embodiment, the "output code" is contained in the UART data output from the communication control unit 8 of the controlled apparatus 4 to the controlled apparatus MPU 13 as is, and therefore the "ID code," which was determined based on the RF packet data that were demodulated from the initially received RF signal by the communication control unit 8 of the controlled apparatus 4, is made to function as a mode code. For example, herein, a "universal ID," wherein all bits are set to "0," is assigned to the "ID code," and therefore the "ID code" serves as a mode code that indicates "unpaired mode start." As shown in the same figure, the "status code" of this RF packet data is assigned "70h," which indicates "control data transport," and the UART data discussed above are included in the "transport data," which follows the "ID code," as is. Thereby, the control data (data 1 through data 4) are included in the RF packet data along with the output code of "A0h." In a similar manner to that discussed earlier, the RF packet data generated by the communication control unit 8 are DSSS modulated by the RF communication circuit unit 9 and transmitted as an RF signal from the printed antenna 7 on one of the channels in the 2.4 GHz band. Furthermore, the channels used to transmit the RF signals in the unpaired mode may be different from those used in the normal operation mode so that they do not overlap.

The RF communication module 2 of the remote control transmitter 3 that transmitted the RF signal terminates the unpaired mode and then returns to the initial operation mode (step S26).

At the RF communication module 2 of the controlled apparatus 4 that is operated in the initial operation mode, the interrupt of the RF packet data that were demodulated from the received RF signal triggers the determination of whether the received RF signal is one that transmits a mode code that indicates pairing mode start (step S11). The "status code" is "70h," which indicates that a mode code that is used in the pairing mode is not included and that control data are being transported, and it is further determined whether the "output code" contains a mode code that indicates unpaired mode start (step S12). All bits of the "output code" are set to "0." Because the mode code of the universal ID is assigned, it is determined that an RF signal has been received that was transmitted by a "special input operation" in the "unpaired mode," and therefore the RF communication module 2 of the controlled apparatus 4 is made to transition to the "unpaired mode" (step S27). However, if the "output code" is some other ID, such as the master ID that is assigned to the remote control transmitter 3, then it is determined that an RF signal has been mistakenly received that was transmitted by a normal input operation, and the mode returns to the initial operation mode, which was the mode prior to the interrupt (step S28).

Because the "output code" is "A0h," the communication control unit 8 of the RF communication module 2 that transitioned to the "unpaired mode" outputs the UART data portion of the RF packet data as is from the UART interface 5 to the input port of the controlled apparatus MPU 13 as bit stream transmit data (TxD) (step S29), as shown in FIG. 8. The controlled apparatus MPU 13 controls the air conditioner, which is the controlled apparatus 4, in accordance with the control data (data 1 through data 4) contained in the UART data so that it performs the cooling operation, and the mode returns to the initial operation mode, which was the mode prior to the interrupt (step S28).

At this point, the unique ID of the specified communication counterpart (the master ID) is not stored in the ID storage unit 20, and therefore if the controlled apparatus 4 receives the RF signal transmitted from the remote control transmitter 3 in the "unpaired mode" then, regardless of the transmission source of the RF signal, it transitions to the "unpaired mode" and is controlled by the control data that were demodulated from that RF signal; accordingly, as shown in FIG. 8, if numerous controlled apparatuses 4 in the initial operation mode are disposed in an area that the RF signal reaches, then all of the controlled apparatuses 4 are simultaneously controlled through the abovementioned process in the unpaired mode. Accordingly, it is possible to verify collectively the operation of multiple controlled apparatuses 4.

Furthermore, in the present embodiment, the remote control transmitter 3 and the controlled apparatus 4 are made to transition to the "unpaired mode" by a "special input operation" that generates prescribed control data. However, control data may also not be included in the RF packet data transmitted from the remote control transmitter 3, a mode code that indicates "unpaired mode start" may be included in the status code or the ID code, and thereby the controlled apparatus 4 may be made to transition to the "unpaired mode." Until the controlled apparatus 4 that transitioned to the "unpaired mode" transitions to another mode, such as the initial mode, as a result of, for example, a switch input or another mode code, it receives RF signals transmitted from an unspecified remote control transmitter 3 without performing a comparison to see if there is a match with the unique ID of the specified communication counterpart stored in the ID storage unit 20 and executes operation based on the control data that were demodulated from that RF signal, and therefore it is possible at such a time to omit the process discussed above that causes the controlled apparatus 4 to transition to the "unpaired mode."

The operation of the remote control transmitter 3 and the controlled apparatus 4 that have transitioned to the "normal operation mode" will now be explained. When the pairing process discussed above is complete, the ID storage unit 20 of the remote control transmitter 3 stores the master ID, which is its own assigned unique ID, and the slave ID that is assigned to the specified communication counterpart, and the ID storage unit 20 of the controlled apparatus 4 stores the slave ID, which its own assigned unique ID, and the master ID that is assigned to the specified communication counterpart. Accordingly, when the power is turned on and initialization is complete, it is determined in step S3 in FIG. 5 that the pairing process is complete and the mode therefore transitions to the "normal operation mode" (step S30).

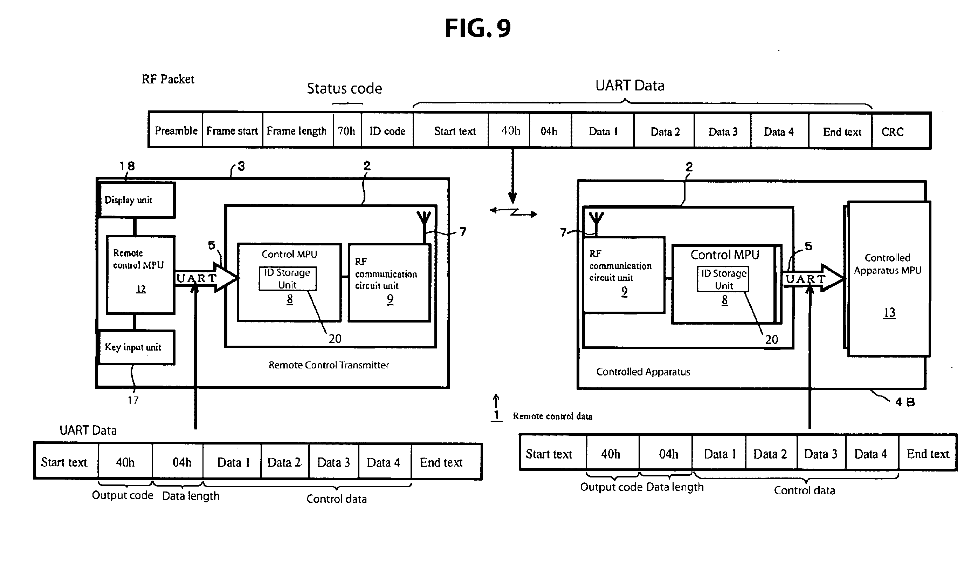

If the controlled apparatus 4 has a configuration that is identical to the embodiment discussed above and is to be remotely controlled by the remote control transmitter 3 so that it similarly performs the "cool" operation, then a normal input operation is performed on the key that indicates "cool," and the UART data generated by the remote control MPU 12 and shown in FIG. 9 are perfectly identical to the UART data generated in the "pairing mode" and shown in FIG. 7. In addition, because the RF communication module 2 is in the "normal operation mode," the RF packet data generated by the communication control unit 8 of the RF communication module 2 based on this UART data are identical to the RF packet data shown in FIG. 7 with the exception that the "status code" is set to "70h," as shown in FIG. 9. Namely, the "normal operation mode" is indicated by a mode code that comprises a combination of two types of codes: the "status code" that is set to "70h," which indicates data transport, and the "ID code" that is set to the master ID that indicates the unique ID of the transmission source. The process performed up until the RF packet data are input to the RF communication module 2 of the controlled apparatus 4 that receives the RF signal is identical to that discussed above, and the explanation thereof is omitted.

The communication control unit 8 of the RF communication module 2 of the controlled apparatus 4 in the "normal operation mode" reads out the master ID of the communication counterpart, which is stored in the corresponding ID storage unit 20, and compares such with the master ID that is contained in the "ID code" of the RF packet data. If the IDs do not match, then the RF packet data are ignored and the mode returns to the normal operation mode, which was the mode prior to the interrupt.

In addition, if IDs match, then the data is assumed to have been transmitted from the communication counterpart specified by the pairing process; further, because the "output code" is "40h," the UART data portion of the RF packet data is output, as is, from the UART interface 5 to the input port of the controlled apparatus MPU 13 as bit stream transmit data (TxD), as shown in FIG. 9. The controlled apparatus MPU 13 controls the air conditioner, which is the controlled apparatus 4, in accordance with the control data (data 1 through data 4) contained in the UART data so that it performs the cooling operation, and then the mode returns to the normal operation mode, which was the mode prior to the interrupt.

In each of the modes discussed above, it was explained that the controlled apparatus 4 has a controlled apparatus MPU 13 that inputs serial UART data from the UART interface 5. However, even if the controlled apparatus is the IR communications system dedicated controlled apparatus 4A that has the controlled apparatus MPU 13 that inputs the pulse modulated signal, which was demodulated from the IR signal, from the pulse modulated signal input port, it is possible to remotely control the controlled apparatus 4A in the "pairing mode," the "unpaired mode," and the "normal operation mode" using the control data.

If the controlled apparatus 4 is the controlled apparatus 4A that has the controlled apparatus MPU 13 that performs input via the pulse modulated signal input port, then the output code of the UART data generated by the remote control MPU 12 of the remote control transmitter 3 is set to an output code that specifies a pulse signal format that can be demodulated by that controlled apparatus MPU 13. Because the operations of, for example, the remote control transmitter 3 transmitting an RF signal, which is modulated with the RF packet data that contain control data, and the controlled apparatus 4A responding with control data that contains the RF packet data, which was demodulated from the RF signal by the controlled apparatus 4A, are common to each mode, the following explanation assumes that, in the "unpaired mode," the controlled apparatus 4A is an IR communications system dedicated controlled apparatus 4A that is controlled by the reception of a PWM modulated signal in format #1 of company "A," and similarly that the controlled apparatus 4A is remotely controlled by the remote control transmitter 3 so that it performs the "cool" operation.

Because the controlled apparatus 4 is the controlled apparatus 4A that receives a PWM modulated signal in format #1 of company "A," the "output code" in the UART data generated by the remote control MPU 12 of the remote control transmitter 3 contains either "51h" or "B1h," as shown in FIG. 3, and because the "output code" was generated by control data as a result of a "special input operation," it is "B1h." Accordingly, as shown in FIG. 10, RF packet data, wherein the output code has changed from "A0h" to "B1h" (compared with FIG. 8), are input to the communication module 2 of the controlled apparatus 4A.

Because the "ID code" of the RF packet data is the universal ID of the mode code that indicates unpaired mode start, the communication control unit 8 of the communication module 2 transitions to the "unpaired mode" and the output code is "B1h." Therefore, format #1 of company "A" is read out from the format storage unit 15, the pulse signal modulation unit 16 performs PWM modulation on the input UART data in accordance with format #1 of company "A," and the PWM modulated signal from the PWM output interface 14 is output to the PWM input port, which is a pulse modulated signal input port, of the controlled apparatus MPU 13.

As shown in FIG. 10, the PWM modulated signal that is output to the controlled apparatus MPU 13 comprises pulse signals, which are of two pulse widths in accordance with binary data, that are generated based on PWM data that comprise a custom code 1 that indicates, for example, that the product is intended for company "A," a custom code 2 that indicates that the product category is air conditioner, a data code that indicates that control data (data 1 through data 4) are contained in the UART data, and an inverse data code, which is the inverse of all of the data of that data code; furthermore, pulse signals that indicate a header and a stop bit are placed before and after the above pulse signals.

The controlled apparatus MPU 13 demodulates the control data from the PWM modulated signal that was input via the PWM input port, and controls the air conditioner, which is the controlled apparatus 4A, in accordance with the control data, which contain an instruction to perform the "cool" operation, so that it performs the "cool" operation. Accordingly, even if the controlled apparatus MPU 13 is one that inputs and demodulates only PWM modulated signals in format #1 of company "A" via the PWM input port, it is possible to remotely control numerous controlled apparatuses 4A with a single remote control transmitter 3 without modifying their structures.

Therefore, according to the present embodiment, even if the controlled apparatus MPU 13 inputs and demodulates a pulse modulated signal in a different format, it is possible to output a pulse modulated signal that can be demodulated by the controlled apparatus MPU 13 merely by associating that format with the output code and storing such in the format storage unit 15.

In addition, because the pulse modulated signal or the secondary modulated signal is generated by the communication control unit 8 on the controlled apparatus 4A side without actually transmitting such as an IR signal, the controlled apparatus MPU 13 can accurately demodulate the control data without generating pulse distortion in the pulse modulated signal that is caused by, for example, the communication environment or the transceiver device.

According to the embodiment discussed above, the pairing process is performed by the operator's initial remote control operation of the controlled apparatus 4 via the remote control transmitter 3, but the pairing process may also be performed by methods other than those disclosed in the present invention.

In addition, the remote control transmitter 3 and the controlled apparatus 4 that have transitioned to the normal mode may each be provided with a means for resetting the initial operation mode by deleting the unique ID of the specified communication counterpart that is stored in the relevant ID storage unit 20, and may be further provided with a changing means that changes the unique ID to be stored to a unique ID of another communication counterpart.

In addition, the format storage unit 15 and the pulse signal modulation unit 16 may each comprise a storage device, a circuit device, and the like that are separate from the control MPU 8; furthermore, the pulse signal format stored in the format storage unit 15 may be a signal format of another modulation method, such as that of a PPM modulated signal.

In addition, each of the operation modes discussed above is indicated by a mode code, which comprises a combination of at least one of the status code, the ID code, and the output code of the RF packet data, that is transmitted to the controlled apparatus 4, but may be indicated by a mode code that comprises at least any one of the data of the RF packet data.

It is within the scope of the present invention to include all foreseeable equivalents to the elements of the present invention as described with reference to FIGs. 1-10. The examples provided are not to be interpreted as limiting the invention beyond what that which is claimed. The examples may also be extended, for example, in the following manner. As described above, the remote control transmitter 3 and the controlled device 4 are paired. The present invention may also be applied to a RF communication system that remotely controls a plurality of controlled devices 4 from a single remote control transmitter 3.

## Claims

1. An RF communications system that comprises:
a remote control transmitter that has a key input unit, wherein guidance is provided on the input operation method of each key so that a controlled apparatus is controlled so that it performs a specified operation, and a slave ID storage unit that is capable of storing a slave ID of a communication counterpart, and that generates control data that control the operation of the controlled apparatus in accordance with the input operation performed on the key input unit, transmits an RF signal that is modulated with RF packet data that contain the control data, and demodulates RF packet data from a received RF signal;
wherein the controlled apparatus has a master ID storage unit that is capable of storing a master ID of a communication counterpart and that controls the operation of each of its units based on the control data of the RF packet data transmitted from the remote control transmitter, and that is capable of transmitting an RF signal that is modulated with RF packet data that contain a unique slave ID that is assigned to itself;
wherein, between the remote control transmitter and the controlled apparatus that are respectively specified by the master ID and the slave ID, the RF communications system remotely controls the controlled apparatus via an RF signal that is transmitted from the remote control transmitter through a pairing process between the remote control transmitter and the controlled apparatus that are operated in a pairing mode in which the remote control transmitter transmits RF packet data that contain the unique master ID assigned to itself and a mode code that indicates pairing mode start to the controlled apparatus via an RF signal, the controlled apparatus, wherein the master ID is stored in the master ID storage unit, transmits RF packet data that contain the slave ID, the master ID, and a mode code that indicates pairing ACK back to the remote control transmitter via an RF signal, and the remote control transmitter stores the slave ID in the slave ID storage unit; and
wherein:
after power is turned on for startup, the slave ID is not stored in the slave ID storage unit, whereby the remote control transmitter transitions to the pairing mode when control data is generated in accordance with a normal input operation that is performed on the key input unit in accordance with the guided input operation method;
the remote control transmitter transmits RF packet data that contain the master ID, the control data, and the mode code that indicates pairing mode start via an RF signal;
after power is turned on for startup, the master ID of the communication counterpart is not stored in the master ID storage unit, and therefore the controlled apparatus transitions to the pairing mode when the RF packet data that were demodulated from the received RF signal contains the mode code that indicates pairing mode start; and
the controlled apparatus transmits RF packet data that contain the slave ID, the master ID, and the mode code that indicates pairing ACK back to the remote control transmitter via an RF signal, and performs an operation based on the control data contained in the RF packet data that were demodulated from the received RF signal.

2. An RF communications system according to Claim 1, wherein
after power is turned on for startup, the slave ID is not stored in the slave ID storage unit, whereby the remote control transmitter transitions to an unpaired mode when control data are generated in accordance with a special input operation that is performed on the key input unit and is different from the guided input operation method;
the remote control transmitter transmits RF packet data that contain the control data via an RF signal;
after power is turned on for startup, the master ID of the communication counterpart is not stored in the master ID storage unit, and therefore the controlled apparatus transitions to the unpaired mode when the RF packet data demodulated from the received RF signal does not contain the mode code that indicates pairing mode start, but does contain the control data; and
the controlled apparatus performs an operation based on the control data contained in the RF packet data that were demodulated from the received RF signal without transmitting RF packet data that contain the mode code that indicates pairing ACK back to the remote control transmitter via an RF signal.

3. An RF communications system according to Claim 1, wherein
after power is turned on for startup, the slave ID is not stored in the slave ID storage unit, whereby the remote control transmitter transitions to the unpaired mode when the special input operation that is performed on the key input unit and is different than the guided input operation method is received;
the remote control transmitter transmits RF packet data that contains the mode code that indicates unpaired mode start via an RF signal;
after power is turned on for startup, the master ID of the communication counterpart is not stored in the master ID storage unit, and therefore the controlled apparatus transitions to the unpaired mode when RF packet data demodulated from the received RF signal contains the mode code that indicates unpaired mode start, without transmitting RF packet data that contain the mode code that indicates pairing ACK back to the remote control transmitter via an RF signal; and
the controlled apparatus that transitioned to the unpaired mode receives an RF signal transmitted from an unspecified remote control transmitter and performs an operation based on control data contained in the RF packet data that were demodulated from that RF signal.

4. An RF communications system according to Claim 1, wherein
the controlled apparatus comprises:
a pulse signal modulation unit that generates a pulse modulated signal based on control data of the RF packet data;
a pulse signal demodulation unit that demodulates control data from the pulse modulated signal output from the pulse signal modulation unit; and
a format storage unit that stores a pulse modulated signal format, with which the pulse signal demodulation unit of each controlled apparatus of a plurality of controlled apparatuses is capable to demodulate a pulse modulated signal, associated with an output code;
wherein the remote control transmitter that transitioned to the pairing mode or the unpaired mode includes an output code, which specifies a pulse modulated signal format with which the pulse signal demodulation unit of the controlled apparatus is capable to perform demodulation, and control data in the RF packet data; and
wherein the controlled apparatus that transitioned to the pairing mode or the unpaired mode reads out the pulse modulated signal format associated with the output code that is contained in the RF packet data from the format storage unit, and outputs a pulse modulated signal that is pulse modulated with control data in accordance with the pulse modulated signal format that was read out to the pulse signal demodulation unit.
